# EUROPEAN PATENT APPLICATION

(11) **EP 3 128 227 A1**
(43) Date of publication of application: **08.02.2017**
(21) Application number: 16182762.1
(22) Date of filing: 04.08.2016
(51) Int. Cl.: F21S 8/10

(54) **REFLECTORLESS ANTI-GLARE LIGHTING ASSEMBLY FOR VEHICLES CIRCULATING ON PUBLIC ROADS**

(30) Priority: 06.08.2015 ES 201531176
(71) Applicant: Regner & Asociados SL, 17181 Aiguaviva (Girona) (ES)
(72) Inventor: GARCÍA GUTIÉRREZ, Raúl, 17420 Sils (GIRONA) (ES)
(74) Representative: Mohammadian, Dario

(57) **Abstract**

In one embodiment of the invention, a reflectorless anti-glare lighting assembly(200) is provided, which is configured for collimating the emitted light by at least light source (240) by means of a lens (260) with a flat-convex center for projecting the light beam with a variety of intensity zones, the weakest being the hemisphere in the upper part of the beam, for preventing glaring off pedestrians or vehicle drivers. The reflectorless anti-glare lighting assembly is compact, which translates into a significant reduction in costs. Further, it comprises a fixing means (250) of the light emitting source, guaranteeing it will not move within the housing due to possible impacts or vibrations.

## Description

### TECHNICAL FIELD

The invention refers to the field of lighting assemblies for the front lighting of a vehicle that permits circulating safely and that does not glare off pedestrians or drivers that are within its field of action.

### BACKGROUND OF THE INVENTION

The front lighting assemblies for vehicles are key to active safety, their function being to allow users to see and be seen. In order to fulfill this function, they have to emit a powerful light beam that permits the user of the vehicle to circulate in environments with reduced visibility, without the help of any other additional lighting than the one carried onboard its vehicle. At the same time, intended for vehicles that circulate on public roads, the front lighting assemblies need to have a convenient design in order not to glare off other drivers or pedestrians that are moving in opposite direction and who could find themselves within the light beam. This double requirement is particularly relevant for those vehicles that frequently interact with pedestrians, such as wheelchairs, bicycles, and motorcycles, as in their trajectory, without adequate lighting, they could easily glare off people that are along their path.

Different partial solutions exist for this problem. The majority of lighting assemblies use reflectors to direct the light and thus prevent the glare. The problem is that, due to vibrations caused by repeated circulation of the vehicles through irregular pavements, these reflectors end up loosening and falling off. Due to these vibrations, the beam angle of the lighting assemblies loses its positioning. Hence, a constant maintenance by the user is required to correct the direction of the lighting assembly and to fix the reflector repeatedly.

Other solutions use a matrix of LEDs (Light Emitting Diodes) that emit at different intensities, to create a surrounding zone within the beam with lower intensity than the central part. Some variations use a plurality of lenses in combination with the LEDs. These solutions are very expensive, they also have an excessive consumption of energy, making the frequent replacement of batteries necessary.

The most complex solutions are based on the handcrafted design of each lens. In this manner, the lens has different zones that attain different refractive indexes with the objective of creating a beam with the desired intensity circumferences. This solution is however not possible for its use in transport vehicles, as it is excessively expensive and not admitted by the market. The use of these solutions is reserved for different applications.

Finally, incandescent front lighting devices exist, that combined with one or several reflectors, permit obtaining the adequate distribution. The inconvenience of these devices is its elevated energy consumption and short useful lifetime, as they comprise light bulbs that have to be replaced in a short period of time. Also, these types of bulbs have a negative effect for the environment and they are bound to be prohibited in the short term.

Therefore the need exists to effectively solve these problems and disadvantages.

### SUMMARY OF THE INVENTION

It is the objective of the invention to solve the aforementioned problems and provide a front lighting assembly wherein these issues are solved.

In particular, it is desirable to provide an anti-glare lighting assembly without reflector, as any type of reflector reduces its usage reliability and significantly increases the costs of the device.

The design of the new lighting assembly permits obtaining an adequate light projection for a safe drive, in order to obtain a good lighting permitting the user to see and be seen. On the other hand, the device should prevent that the intense light projection glares off, and to this effect its intensity has been restricted in different zones, in particular a cut-off in the upper part of the spotlight that limits the light intensity emitted to a maximum of 2 lx over 3.4º. This objective is attained by means of a lighting assembly that uses at least one light source and at least one lens to produce the desired effects. A single support piece that comprises a beam configuration means, that partially blocks the beam, is positioned between the lens and the light source, collimating the light in such a manner that a beam is obtained with the desired anti-glare properties.

The device of the invention prioritizes an innovating design, by integrating the beam configuration means and the light source support itself in a same single piece, and thereby obtain the desired anti-glare distribution, distinguished by the absence of a reflector. Some features provide the assembly with a more compact configuration, without requiring adjustments during its whole useful lifetime.

Also, a novel light source fixing means assures it will not move within the housing due to possible impacts or vibrations.

It should be noted that the present invention provides a highly competitive lighting device for the market, as a significant reduction in costs has been obtained via the expressly conceived design using a reduced number of pieces.

Therefore, it is an object of the invention to provide an anti-glare lighting assembly.

It is another object of the invention to provide a vehicle that comprises at least one anti-glare lighting assembly.

It is another object of the invention to provide a method of producing an anti-glare lighting assembly.

The invention provides devices that implement different aspects, embodiments and features of the invention, and that are implemented via various means. The various means can comprise, for example, hardware, and these techniques can be implemented in one single means, or a combination of various means.

### BRIEF DESCRIPTION OF THE DRAWING(S)

The features and advantages of the present invention will become more apparent from the detailed description set forth below when taken in conjunction with the drawings in which like reference characters identify corresponding elements in the different drawings. Corresponding elements may also be referenced using different characters.
**FIG. 1** depicts a light beam that complies with the distribution requirements assuring a correct visibility without glaring off drivers or pedestrians that circulate or transit in opposite direction.
**FIGs. 2A****,** **2B** **and** **2C** depict different views with the components of the vehicle front lighting assembly for preventing glare.
**FIGs. 3A** **and** **3B** depict different views with the single support piece combining the different functions of fixing the lens and configuring the beam.

### DETAILED DESCRIPTION OF THE INVENTION

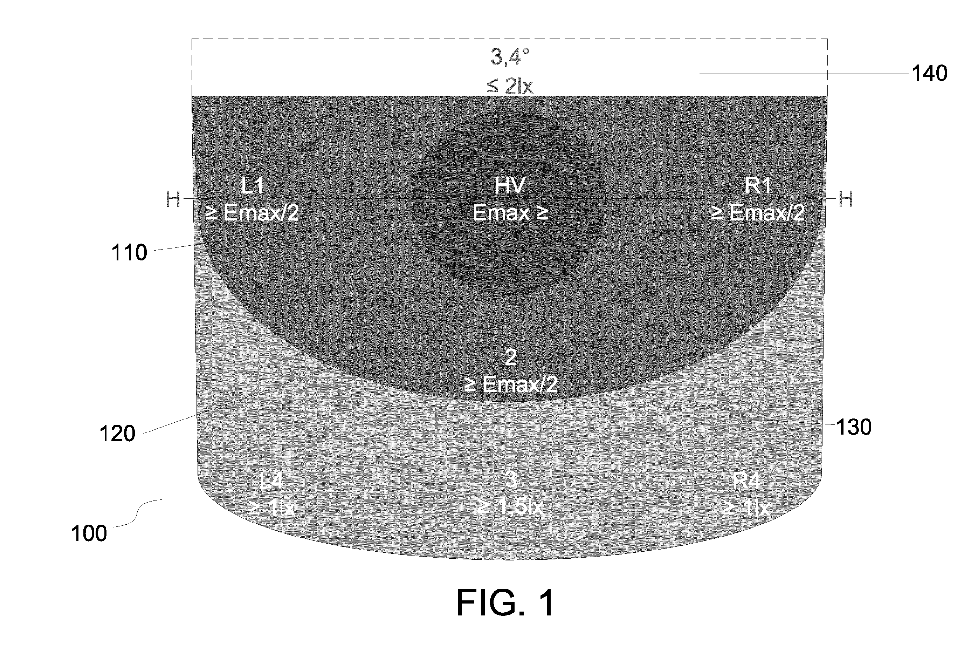

A light distribution geometry is established, notably a limitation above 3.4º to 2 lx to prevent glare. **FIG. 1** depicts a light beam 100 aligned in the horizontal-horizontal HH line and at the horizontal-vertical HV point. The luminance level is measured at a distance of 10 meters. A first high intensity central zone 110 is defined at the HV point that projects onto a surface with a minimum intensity of 20 lx, or lux. There is no maximum value for the light distribution, but a ratio between the maximum and the HV point measured value, which is 1.2. A second surrounding zone 120 is defined delimited by the points L1, R1 and 2, with a lighting intensity of minimum half of the maximum value. Finally, a third external surround zone 130 is defined, with lower light intensity, between points 2 and 3 whose value should be a minimum of 2.5 lx. In order to prevent the aforementioned glare, a fourth zone 140 is defined in the upper end of the light beam, delimited by the points L4 and R4, wherein the 2 lx light intensity limit should not be surpassed. This fourth zone covers the superior part of the light beam, or in other words, beyond 3.4º in the vertical direction starting from the transversal axis of the center of the light beam. As a result, the fourth zone 140 is a hemisphere that presents a lower intensity than any other zone in the beam, and prevents glaring off. In between the different zones the transition of the light intensity is gradual.

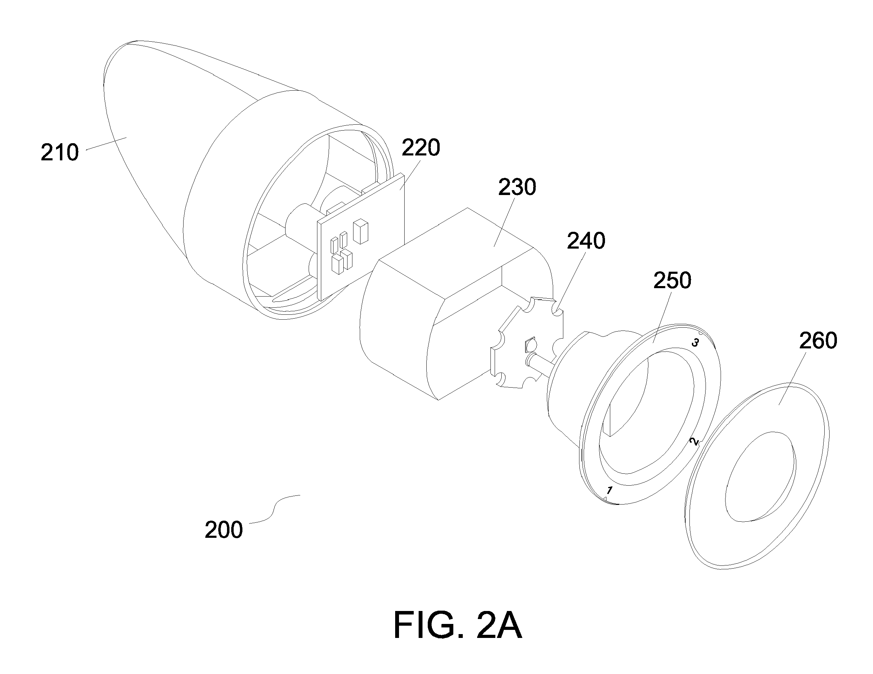

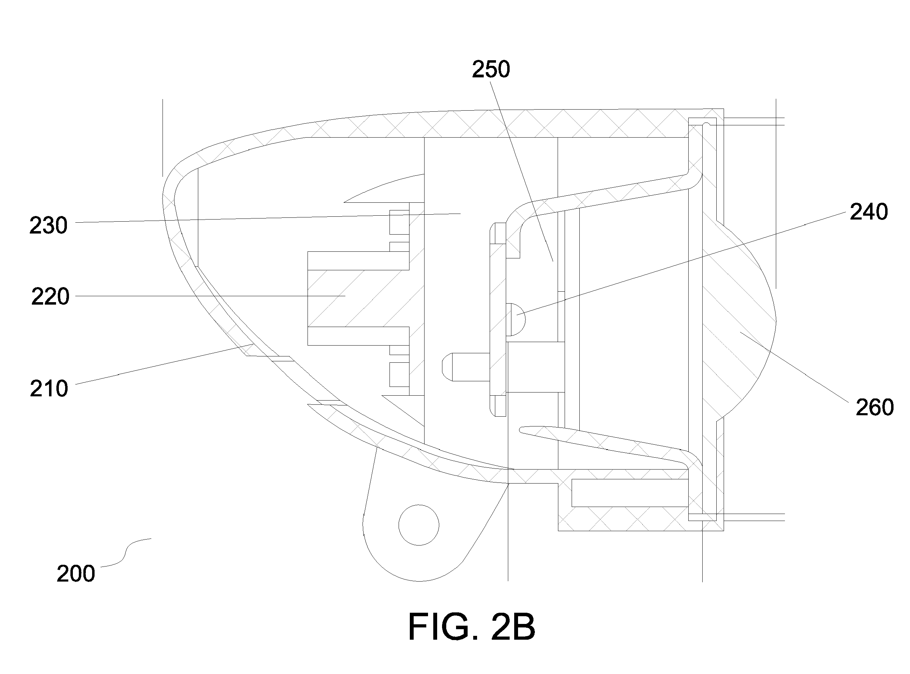

**FIGs. 2A** **and** **2B** depict the different components of the reflectorless anti-glare front lighting assembly for vehicles. In this embodiment, the anti-glare lighting assembly 200 comprises a light source 240, an optical lens 260, and a support means 250 between the light source and the optical lens. On one hand, the support means 250 comprises a fixing means for fixing the light source 240 immovably in relation to the lens 260 to collimate the light beam and assure that it does not move within the housing due to possible impacts or vibrations. On the other hand, a beam configuration means partially blocks the projected beam generating a hemisphere 140 illuminated with a lower intensity than any other beam zone. Therefore, the beam configuration means and the light source fixing means are formed from a same single support piece 250. The beam configuration means 250 is arranged always between the light source 240 and the optical lens 260.

The optical lens 260 is configured by means of a flat-convex center. The flat part is arranged in the interior of the assembly while the convex part points towards the exterior. The light source 240 is fixed on a support. The support is immovably coupled with the light source fixing means, thereby defining a fixed longitudinal axis by which light is projected through the lens to a central focus point of the light beam.

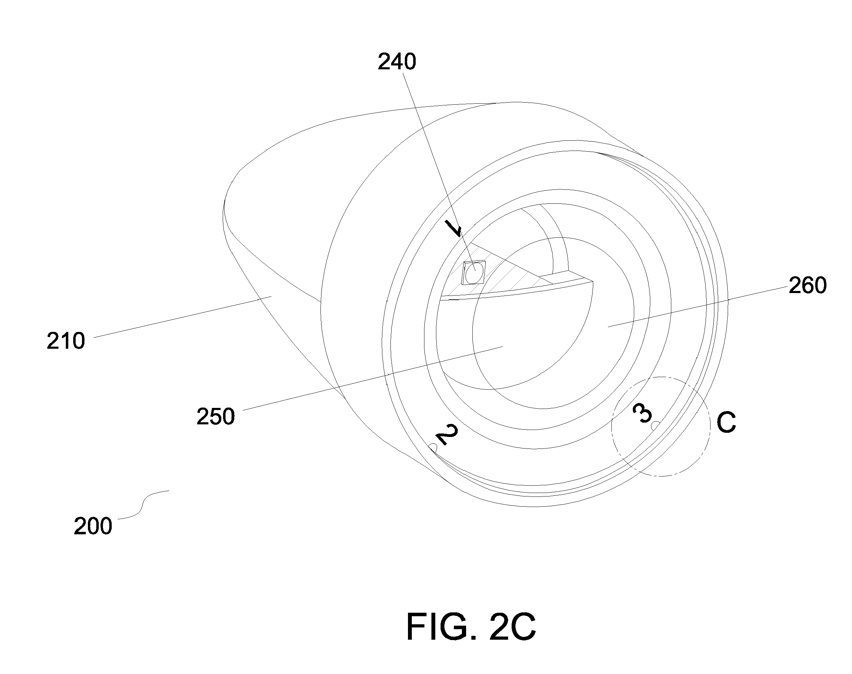

The light source 240 is of the semiconductor type, for example, an LED. A control circuit 220 controls the turning off and turning on, the intensity or frequency of the light. An insulating means 230 assures the electric insulation of the circuitry from the rest of the assembly that could possibly enter into contact with fluids, for example, the rain water. All of the components are housed within a housing 210, as can be seen in **FIG. 2C****.**

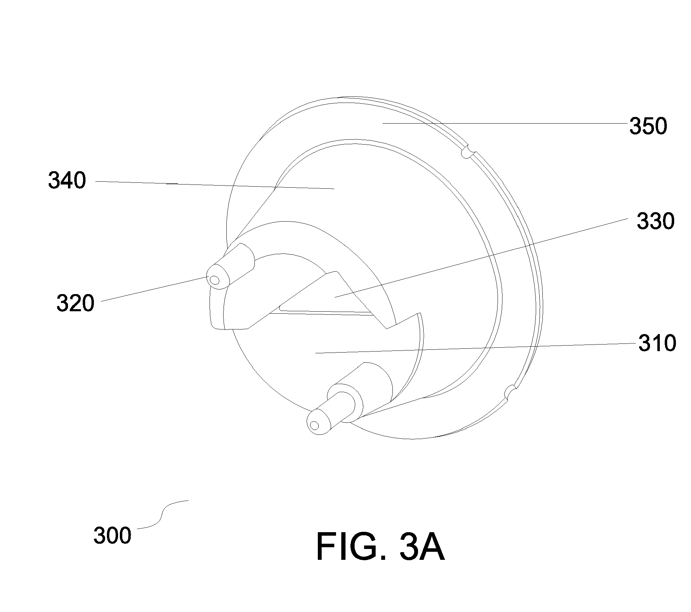

**FIG. 3A** depicts the single support piece 300 from the inside of the assembly. The light source support 240 is coupled to the fixing means 320. Once coupled, the light source is fixed to the fixing means in a predetermined manner, in order to project the light through the lens 260 focusing on its central point, assuring that the fixing means does not move within the inside of the housing due to possible impacts or vibrations.

The light beam configuration means 310 partially blocks the emitted light from the light source 240, permitting light to partially pass through the gap 330. An accentuated opening of the gap 330 permits passing the light source 240 cables. The configuration means 310 limits the light beam by means of a transversal edge that allows the confinement of the light beam that is over 3.4º.

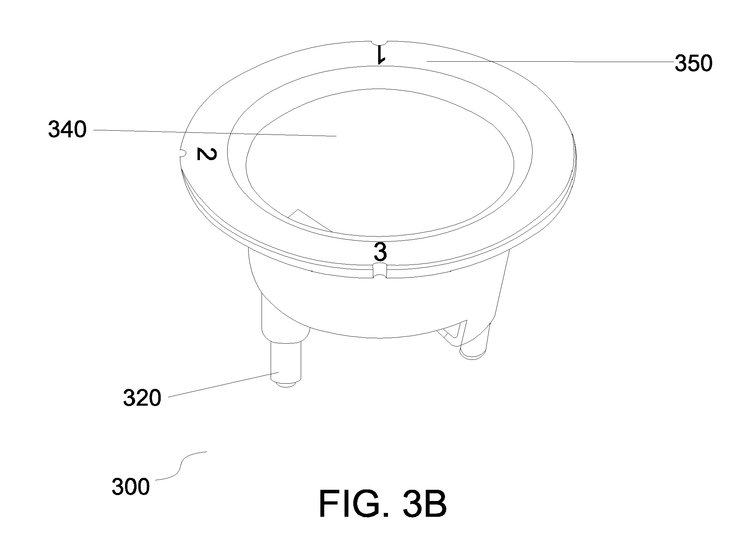

The support piece 300 comprises also a light channeling means 340 whose function is preventing that the light that has not been blocked by the light beam configuration means 310 propagates in other directions that are not the frontal direction. The light channeling means 340 can be seen in **FIG. 3B** that depicts the single support piece 300 as a whole. Further, the fixing means comprises a protrusion 350 that permits its precise fit to the housing 210.

Further, the lighting assembly housing 210 comprises fixing means, which permit fixing the lighting device to the vehicle to which it will be installed, such that it illuminates frontally without glaring off. The vehicle can be of any type, the advantages of the assembly of the invention being more apparent in transport means of low height, such as for example bicycles, motorcycles or wheelchairs. It should be mentioned that the housing 210 of the assembly is designed to be installed on the vehicle at different positions permitting the anti-glare lighting assembly 200 to have different installation modes, while always preventing problems or disturbances with the visual perception.

What has been described comprises examples of one or more embodiments. It should be understood that it is not possible to describe each and every one of the combinations, or permutations, or components and/or of the possible methods with the objective of describing possible embodiments. On the other hand, the skilled artisan would recognise that many other combinations and permutations of the different embodiments are possible in view of the general inventive concept derived by a direct and objective reading of this disclosure. As a result, the intention is that all alterations, modifications, and variations are covered that fall within the scope of the annexed claims.

## Claims

1. Vehicle front lighting assembly that prevents glare without using a reflector that comprises at least one light source, at least one optical lens, and a support piece, wherein the support piece itself comprises fixing means for fixing the at least one light source securely in relation to the at least one lens to collimate the light of the at least one light source in a light beam to project frontwards, and comprises at least one beam configuration means that partially blocks the projected beam generating an illuminated hemisphere on the upper part of the beam with a lower intensity than in any other zone of the beam, in which the beam configuration means and the light source fixing means form a single piece.

2. The lighting assembly according to claim 1, wherein the optical lens is configured by means of a convex-flat center, with the flat part in the interior of the assembly.

3. The lighting assembly according to claim 2, wherein the light source is fixed to a support that couples to the fixing means in a fixed form, assuring that the light source does not move in the interior of the housing due to possible impacts or vibrations.

4. The lighting assembly according to claim 2, wherein the beam configuration means limits the light beam by means of a transversal edge that allows confining the light beam that is above 3.4º.

5. The lighting assembly according to claim 2, further comprising a circuit to control turning off, turning on, the intensity and the frequency of the light emitted from the source.

6. The lighting assembly according to claim 2, further comprising means for assuring the electric insulation of the circuitry from the rest of the assembly.

7. The lighting assembly according to claim 2, wherein the components are housed within a housing.

8. The lighting assembly according to claim 2, further comprising means for channeling forwards the light that has not been blocked by the beam configuration means, without having to use a reflector.

9. The lighting assembly according to claim 2, wherein the fixing means comprises a protrusion that permits fixing this piece to the housing.

10. The lighting assembly according to claim 2, wherein the housing of the lighting assembly comprises fixing means for fixing the lighting assembly to the vehicle.

11. A vehicle that comprises at least one lighting assembly according to any of the preceding claims for preventing lighting glare.

12. The vehicle according to claim 11, wherein the vehicle is a wheelchair, a bicycle, a motorcycle, or any other vehicle that could glare off drivers or pedestrians that are confronted with a light beam directed at them.

13. The vehicle according to claim 11, wherein the at least one lighting assembly is disposed in the vehicle to illuminate frontally, but can also be in any other disposition to prevent glaring off drivers or pedestrians that are confronted with the light beam directed at them.

14. A method for producing a vehicle front lighting assembly that prevents glare without using a reflector, wherein the lighting assembly comprises at least one light source and at least one optical lens, wherein the method comprises integrating between the at least one light source and the at least one optical lens, a support piece for fixing the light source fixedly to collimate the light emitted by the light source projecting the light towards the front of the vehicle preventing glare, the support piece being at the same time a fixing means and a beam configuration means that partially blocks the projected beam generating an illuminated hemisphere on the upper part of the beam with a lower intensity than in any other zone of the beam.
